# EUROPÄISCHE PATENTSCHRIFT

(11) **EP 1 882 784 B1**
(45) Veröffentlichungstag und Bekanntmachung des Hinweises auf die Patenterteilung: **25.05.2016**
(21) Anmeldenummer: 07014448.0
(22) Anmeldetag: 23.07.2007
(51) Int. Cl.: E03B 7/04, E03B 7/09, F16L 41/02, F16L 41/03

(54) **Anschlussarmatur**
Connecting fitting
Armature de fermeture

(30) Priorität: 24.07.2006 DE 202006011360 U
(43) Veröffentlichungstag der Anmeldung: 30.01.2008
(73) Patentinhaber: Gebr. Kemper GmbH + Co. KG Metallwerke, 57462 Olpe (DE)
(72) Erfinder: Fries, Stefan, 57462 Olpe (DE); Theile, Tobias, 57489 Drolshagen (DE)
(74) Vertreter: Grünecker Patent- und Rechtsanwälte PartG mbB

(56) Entgegenhaltungen:
- DE-A1- 3 919 074
- DE-A1- 10 031 854
- GB-A- 2 419 938
- US-A- 2 065 789
- US-A- 2 573 430

## Beschreibung

Die vorliegende Erfindung betrifft eine Anschlussarmatur zum Anschließen einer Ringleitung mit mindestens einem Verbraucher an einen Stockwerks- bzw. Steigrohrstrang mit an den Strang anschließbaren Ein- und Auslassöffnungen und einer dazwischen liegenden Einfädelöffnung für die Ringleitung, der in Strömungsrichtung eine Querschnittsverengung vorgelagert ist.

Im Bereich der Trinkwassertechnik, insbesondere zur Vermeidung von Verkeimung in Trinkwasserleitungen ist es bekannt, eine Anschlussarmatur der vorstehend erwähnten Art vorzusehen, die einer Abzweigarmatur in Strömungsrichtung des Stranges nachgelagert ist. An der Abzweigarmatur wird eine Teilströmung des Stranges herausgeleitet und über eine Ringleitung zu einem oder mehreren Verbrauchern geführt. Die Ringleitung mündet in der Einfädelöffnung der Anschlussarmatur. In Strömungsrichtung der Einfädelöffnung vorgelagert ist eine Querschnittsverengung, die nach Art einer Düse wirkt und zwischen der Abzweigung und der Einfädelöffnung eine Druckdifferenz bewirkt, durch welche bei einer Strömung in dem Strang auch in der Ringleitung eine Strömung erzeugt wird. Als Strang im Sinne der vorliegenden Erfindung soll jede Hauptleitung verstanden werden, unabhängig davon, ob diese sich innerhalb eines Stockwerkes erstreckt und innerhalb des Stockwerkes mehrere hintereinander angeordnete Nasszellen über jeweils eine Ringleitung mit Trink- bzw. Brauchwasser versorgt, oder als Steigrohrstrang beispielsweise in mehreren Stockwerken übereinander liegende Nasszellen miteinander verbindet.

Aus der DE 39 19 074 ist beispielsweise eine Anschlussarmatur der vorerwähnten Art als Teil eines Reinstwasserversorgungssystems bekannt. Bei dieser vorbekannten Anschlussarmatur wird die aus der Ringleitung in den Strang zurückgeführte Ringleitungsströmung mit einem Winkel von etwa 90 Grad zur Hauptströmungsrichtung in die Anschlussarmatur eingeleitet. Als Hauptströmungsrichtung wird diejenige Richtung verstanden, in der die Hauptströmung, d.h. die Strömung innerhalb des Stranges verläuft. Die aus der DE 39 19 074 bekannte Anschlussarmatur weist die Merkmale des Oberbegriffs des Anspruchs 1 auf, und hat eine Querschnittsverengung, die nach Art einer Venturidüse wirkt und im Bereich der Einfädelöffnung einen Druck bewirkt, welcher niedriger als der Druck im Strang ist, so dass bezogen auf eine der Querschnittsverengung in Strömungsrichtung vorgelagerte Stelle der Armatur, beispielsweise an der Einlassöffnung, ein Wirkdruckverlust auftritt.

Praktische Versuche der Anmelderin haben ergeben, dass insbesondere bei mehreren in Hauptströmungsrichtung hintereinander angeordneten Ringleitungen der strömungsdynamischen Auslegung besondere Beachtung geschenkt werden muss. So sollte nicht nur der Druckverlust innerhalb einer Ringleitung minimiert werden, sondern darüber hinaus auch der Druckverlust jeder einzelnen, in Hauptströmungsrichtung hintereinander angeordneten Anschlussarmatur aufeinander abgestimmt werden, so dass der gewünschte Durchspülungseffekt der Ringleitungen sicher gewährleistet werden kann, um bei Wasserentnahme an einem Verbraucher eine Durchspülung sämtlicher Ringleitungen des Stranges zu bewirken. Dabei ist insbesondere darauf zu achten, dass die Druckdifferenz bei jeder einzelnen Anschlussarmatur möglichst gering wird, ohne dass die gewünschte Durchströmung der Ringleitung bei einer Strömung im Strang, beispielsweise durch Wasserentnahme an einer in Hauptströmungsrichtung dieser Ringleitung nachgeordneten Ringleitung, zum Erliegen kommt.

Im Hinblick darauf wird die gattungsgemäße Anschlussarmatur dadurch weitergebildet dass die Einfädelöffnung an dem trichterförmigen Rohrabschnitt vorgesehen ist und der zu der Einfädelöffnung führende Einfädelkanal eine winkelige Anstellung relativ zur Hauptströmungsrichtung von nicht mehr als 75 Grad hat.

Die vorliegende Erfindung lässt sich von der Überlegung leiten, dass die Anschlussarmatur, speziell die Anordnung und Ausbildung der Querschnittsverengung sowie vorzugsweise zu der Querschnittsführung führende Innenwandungen der Anschlussarmatur und die Anordnung und Ausrichtung der Einfädelöffnung unter Berücksichtigung einer maximalen Druckdifferenz bei einer vorbestimmten, vorzugsweise vorgegebenen Strömungsgeschwindigkeit zu erfolgen hat. Als Strömungsgeschwindigkeit in dem vorerwähnten Sinn wird insbesondere eine mittlere Strömungsgeschwindigkeit verstanden, die rechnerisch durch den Quotienten von Volumenstrom durch die Anschlussarmatur zu Nennweitenquerschnitt der Armatur bzw. des Stranges ermittelt wird. Maßgeblich soll dabei die vorbestimmte Strömungsgeschwindigkeit im Strang sein, d.h. der Quotient aus Volumenstrom im Strang zu wirksamer Querschnittsfläche des Stranges, beispielsweise unmittelbar am Übergang zwischen dem Strang und der Anschlussarmatur.

Der mit der vorliegenden Erfindung angegebene Einströmwinkel hat sich in praktischen Versuchen als ein Winkel erwiesen, bei dem eine Vielzahl von Anschlussarmaturen in einem Strang in Strömungsrichtung hintereinander angeordnet werden können, die jeweils für sich bei einer Durchströmung im Strang eine Durchspülung der Ringleitung bewirken, ohne dass ein übermäßiger Betriebsdruck in dem Rohrleitungssystem aufgewendet werden muss. Insbesondere kommt es bei den üblichen Leitungsdrücken nicht zum Erliegen der Strömung. Die Strömung wird mit relativ geringer Druckdifferenz durch jede einzelne Armatur im Bereich des Stranges, d. h. der Hauptströmung geführt und beim Zurückführen von der Ringleitung in den Strang strömungsgünstig und verlustarm zurückgeführt.

So hat es sich als vorteilhaft herausgestellt, die Druckdifferenz bei einer Strömungsgeschwindigkeit von 1,5 m/s mit nicht mehr als 60 mbar, vorzugsweise nicht mehr als 30 mbar einzustellen, und zwar durch geeignete Anordnung und Ausbildung der Querschnittsverengung und der Einfädelöffnung. Dabei sind im Hinblick auf eine möglichst geringe Druckdifferenz in der Anschlussarmatur scharfkantige Strömungsübergänge zu vermeiden. Insbesondere die zu der Querschnittsverengung führenden Wandungsabschnitte innerhalb der Anschlussarmatur sollen mit einem gleichmäßig gekrümmten Radius vorgesehen sein, durch welchen der Übergang zwischen einem vergrößerten Durchmesserbereich und der Querschnittsverengung verlustarm für die Wasserströmung wird. Die oben genannten Druckwerte beziehen sich vorzugsweise auch auf die Druckdifferenz zwischen dem Ein- und Auslass der Anschlussarmatur, d. h. in Strömungsrichtung vor und in Strömungsrichtung hinter der Querschnittsverengung, und wird beispielsweise im ungestörten Strangquerschnitt gemessen.

Vorzugsweise beträgt die Druckdifferenz bei einer Strömungsgeschwindigkeit von 1,5 m/s nicht mehr als 25 mbar, besonders bevorzugt nicht mehr als 20 mbar.

Praktische Versuche anhand einer Pilotanlage mit mehreren Ausführungsformen der Anschlussarmatur haben gezeigt, dass die Einfädelöffnung derart auszubilden ist, dass die aus der Ringleitung zurückgeführte Ringleitungsströmung unter einem Einströmwinkel von zwischen 35 Grad und 55 Grad zur Hauptströmungsrichtung einströmt. Mit anderen Worten hat ein zu der Einfädelöffnung führender Einfädelkanal vorzugsweise eine winkelige Anstellung relativ zu der Hauptachse der Anschlussarmatur von zwischen 35 Grad und 55 Grad. Besonders bevorzugt beträgt der Einströmwinkel zwischen 42 Grad und 47 Grad bezogen auf die Hauptströmungsrichtung. Bei einer in solcher Weise relativ zu der Hauptströmungsrichtung ausgerichteten zurückgeführten Ringleitungsströrriung ergibt sich ein relativ geringer Druckverlust an der Einfädelöffnung.

Weiterhin hat sich herausgestellt, dass das Verhältnis von Strangdurchmesser zu kleinstem Durchmesser der Querschnittsverengung zwischen 1,5 und 2,1 liegen sollte. Mit diesen Werten lassen sich relativ geringe Druckverluste bei der durch die Anschlussarmatur hindurch strömenden Hauptströmung erreichen.

Aus gleichem Grund sollte das Verhältnis zwischen dem Durchmesser der Einfädelöffnung und dem Durchmesser der Querschnittsverengung in etwa 1 sein. Die insofern zugelassenen Toleranzen schließen Werte von 1,1 bis 0,9 für das Durchmesserverhältnis ein.

Gemäß einer weiteren bevorzugten Ausführungsgestaltung der vorliegenden Erfindung nach Anspruch 6 ist die Gestaltung der Innenwand der Anschlussarmatur speziell im Bereich der Querschnittsverengung so ausgestaltet, dass der durch die Querschnittsverengung fließende Teilstrom verlustarm durch die Anschlussarmatur hindurchgeleitet wird. Dies bedeutet beispielsweise, dass am Übergang zwischen dem Strang und der Anschlussarmatur eine kantenfreie Ausgestaltung verwirklicht ist. Die beiden Teile stoßen zwar aneinander. Die Innenwandung an der Stoßstelle sollte aber glatt sein. Danach kann sich eine Rampe anschließen, die im Wesentlichen vom Innenumfang des Stranges abgeht, sofern ein Düseneinsatz verwendet wird, der die Querschnittsverengung ausformt. Dieser kann bis zu der Querschnittsverengung reichen, die für sich eine zylindrische Innenwandung haben sollte. Zwischen der strömungsseitig vorderen Stirnseite der Anschlussarmatur und dieser Querschnittsverengung kann an der Innenumfangsfläche des Weiteren eine gestufte Konturierung vorgesehen sein, wobei hier vorzugsweise Radien und Rampen vorgesehen sind, so dass die Strömung gleichmäßig und möglichst verwirbelungsfrei von dem Strang in die Querschnittsverengung geleitet wird. Entsprechende Vorgaben gelten nach der vorerwähnten Weiterbildung für den in Strömungsrichtung hinter der Querschnittsverengung liegenden Bereich der Anschlussarmatur. Diese sollte an ihrem strömungsfernen Ende mit gleichem Innendurchmesser zu dem Strang überleiten, den auch der Strang hat.

In Abkehr von dem aus der DE 39 19 074 bekannten Lösungsvorschlag hatte es sich als vorteilhaft zur Verminderung der Druckdifferenz erwiesen, die Einfädelöffnung in Strömungsrichtung hinter dem kleinsten Durchmesser der Querschnittsverengung anzuordnen. Speziell sollte die Einfädelöffnung an einem sich in Strömungsrichtung trichterförmig verbreiternden Rohrabschnitt der Anschlussarmatur vorgesehen sein. Dieser Rohrabschnitt wird vorzugsweise durch einen Düseneinsatz ausgebildet, der als separates Bauteil in einem Armaturengehäuse aufgenommen ist. Als Armaturengehäuse in dem vorerwähnten Sinn wird insbesondere ein Armaturenteil verstanden, welches beidseitig an den Strang anschließbar ist. Auch bei dem Anschluss der Armatur an den Strang sollte auf eine möglichst geringe Verwirbelung des fließenden Wassers in Hauptströmungsrichtung geachtet werden. So ist es zu bevorzugen, den Strang über ein flachdichtendes Außengewinde, über ein Muffeninnengewinde oder über Pressanschlüsse an das Armaturengehäuse anzuschließen. Entsprechende Vorgaben gelten auch für den Anschluss der Ringleitung an die Anschlussarmatur. Hierzu weist diese Anschlussarmatur beispielsweise einen seitlich von der Armatur abgehenden Ringleitungsanschlussstutzen auf. Dieser Ringleitungsanschlussstutzen ist vorzugsweise durch ein in das Gehäuse der Anschlussarmatur eingepresstes Rohrstück gebildet, welches an seinem freien Ende besonders bevorzugt als Pressfitting ausgebildet ist und somit einen Pressfittingstutzen ausformt. Der Ringleitungsanschlussstutzen muss nicht zwangsläufig rechtwinklig von dem Armaturengehäuse abgehen. Eine solche Ausrichtung ist aber im Hinblick auf die einfache Montage der Armatur, d.h. im Hinblick auf einen einfachen Anschluss der Ringleitung an dem Ringleitungsanschlussstutzen zu bevorzugen.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine Längsschnittansicht einer Anschlussarmatur welche hilfreich zum Verständnis der Erfindung ist;
- Fig. 2: eine Längsschnittansicht eines Ausführungsbeispiels einer Anschlussarmatur;
- Fig. 3: eine Längsschnittansicht eines weiteren Ausführungsbeispiels einer Anschlussarmatur; und
- Fig. 4: eine Längsschnittansicht eines gegenüber dem Ausführungsbeispiel in Fig. 3 leicht modifizierten Ausführungsbeispiels mit daran angeschlossenen Absperrventilen.

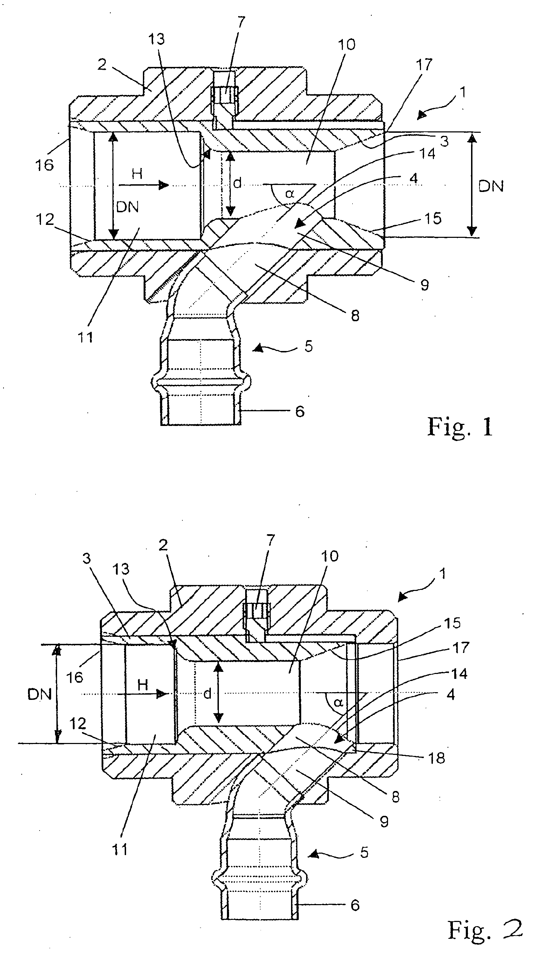

Bei den in den Figuren 1 und 2 gezeigten Ausführungsbeispielen handelt es sich jedenfalls um Anschlussarmaturen 1 mit einem gegossenen Armaturengehäuse 2, in dem ein Düseneinsatz 3 angeordnet ist. Das Anschlussarmaturengehäuse 2 sowie der Düseneinsatz 3 sind im Wesentlichen als rotationssymmetrische Bauteile, speziell aber mit rundem Strömungsquerschnitt ausgebildet. Nicht rotationssymmetrisch vorgesehen ist ein Einfädelkanal 4, der schräg zur Hauptströmungsrichtung H des Stranges verläuft. Vorliegend schließt der Einfädelkanal 4 und die Hauptströmungsrichtung H einen Winkel α von ca. 45 Grad ein. Der Einfädelkanal 4 wird an seinem äußeren Ende durch einen Ringleitungsanschlussstutzen 5 gebildet, der durch ein mit einem 45 Grad-Knick versehenes Rohrstück 6 gebildet ist. Das Rohrleitungsstück 6 hat an seinem freien Ende eine Pressfittingschulter, so dass die Rohrleitung mittels Pressverbindung an die Anschlussarmatur 2 angeschlossen werden kann.

Das Rohrleitungsstück 6 ragt in das Anschlussarmaturgehäuse 2 hinein und ist dort befestigt. Das Rohrleitungsstück 6 endet vor dem Düseneinsatz 3. Dieser ist über eine Madenschraube 7, die im Gewindeeingriff an dem Anschlussarmaturengehäuse 2 gehalten ist, gegenüber selbigem fixiert. Ein an dem Düseneinsatz 3 ausgesparter einsatzseitiger Einfädelkanalabschnitt 8 fluchtet im eingebauten Zustand des Düseneinsatzes 3 mit einem an dem Gehäuse ausgesparten Einfädelkanalabschnitt 9.

Bei beiden Ausführungsbeispielen bildet der Düseneinsatz 3 eine Querschnittsverengung 10 aus, die als Zylinderabschnitt vorgesehen ist und den Durchmesser d hat. Der Düseneinsatz 3 bildet dieser Querschnittsverengung 10 in Hauptströmungsrichtung H vorgelagert einen Zylinderabschnitt 11 aus, dessen Durchmesser DN größer als der Durchmesser d ist und in etwa dem Durchmesser des nicht dargestellten Stranges entspricht. Zwischen diesem Durchmesser DN ist ein Konusabschnitt 12 vorgesehen, der gegenüber der Hauptströmungsrichtung H vorliegend um etwa 15 Grad schräg angestellt ist, um eine mögliche Störkante beim Übergang der Strömung vom Strang in die Armatur (Fitting) zu vermeiden. Der Durchmesser DN geht über einen großzügigen Radius 13 in die zylinderförmige Querschnittsverengung 10 über.

Bei der in Fig. 1 gezeigten Anschlussarmatur, welche hilfreich zum Verständnis der Erfindung ist, hat der Düseneinsatz 3 eine der axialen Länge des Anschlussarmaturengehäuses 2 entsprechende Länge. Danach reicht der Düseneinsatz 3 bei diesem Ausführungsbeispiel beidseitig bis an das Ende des Anschlussarmaturengehäuses 2. Eine durch den Einfädelkanal 4 gebildete Einfädelöffnung 14 ist in der zylinderförmigen Querschnittsverengung 10 ausgespart. In Hauptströmungsrichtung H dahinterliegend befindet sich ein trichterförmig verbreiterter Rohrabschnitt 15, durch welchen die Querschnittsverengung 10 absatzfrei auf den Nenndurchmesser DN überführt wird.

Bei dem in Fig. 1 bezüglich des Nenndurchmessers an Einlass- und Auslassöffnung 16, 17 insofern nicht maßstabsgerecht gezeigten Ausführungsbeispiel wird danach von dem Düseneinsatz 3 sowohl die Einlassöffnung 16 zu der Armatur 1 wie auch die Auslassöffnung 17 der Armatur 1 gebildet. Der Düseneinsatz 3 überragt das Armaturgehäuse 2 beidseitig und bildet so die Anlagefläche zum flachdichtenden Anschluss der Armatur an den Strang.

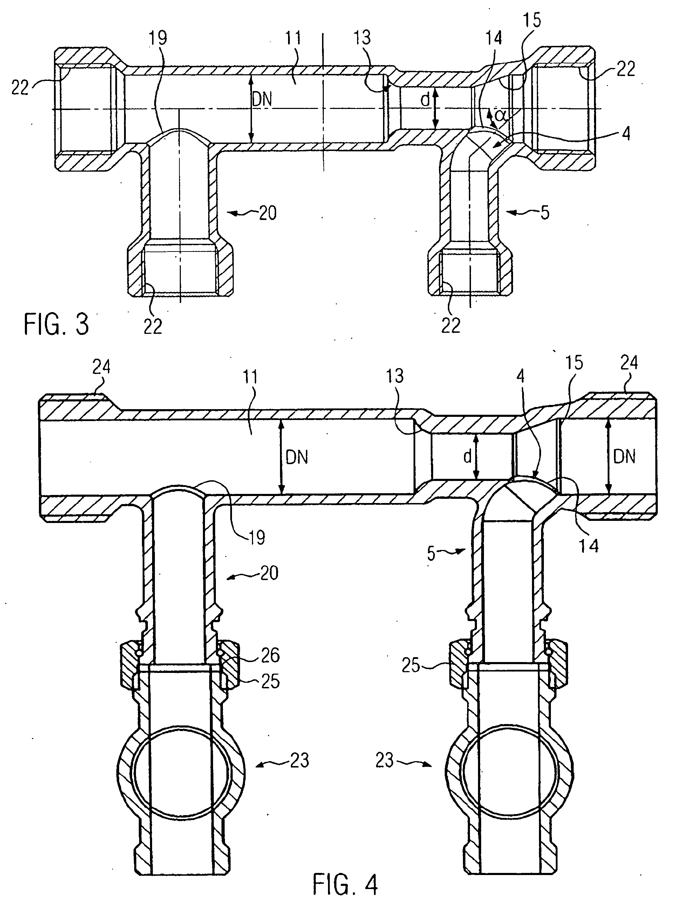

Anders verhält es sich bei dem in Fig. 2 gezeigten Ausführungsbeispiel. Dort ragt der Düseneinsatz 3 lediglich bis zu der Einlassöffnung 16. Der Zylinderabschnitt 11 ist gegenüber dem in Fig. 1 gezeigten Ausführungsbeispiel kürzer ausgebildet. Die Querschnittsverengung 10 hat eine in etwa der Länge der Querschnittsverengung des ersten Ausführungsbeispiels entsprechende axiale Länge. Auch ist der trichterförmig verbreiterte Rohrabschnitt 15 vorgesehen. Dieser reicht allerdings nicht bis zu der Auslassöffnung 17. Vielmehr bildet das Armaturengehäuse 2 im Bereich der Auslassöffnung eine Anlageschulter 18 aus, an der der Düseneinsatz 3 stirnseitig anliegt und somit fixiert ist. Die Einfädelöffnung 14 liegt in dem trichterförmig verbreiterten Rohrabschnitt 15 frei und hat somit eine in Hauptströmungsrichtung H leicht geneigte Ausrichtung. Hierdurch wird gegenüber dem in Fig. 1 gezeigten Ausführungsbeispiel der Druckverlust durch die aus der Ringleitung zurückgeführte Ringleitungsströmung vermindert. Danach hat das in Fig. 3 gezeigte Ausführungsbeispiel bei gleichen Strömungsverhältnissen einen gegenüber dem ersten Ausführungsbeispiel nochmals verminderten Druckverlust. Das in Fig. 3 gezeigte Ausführungsbeispiel hat bei einer Strömungsgeschwindigkeit von 1,5 m/s und einem Durchmesser d der Querschnittsverengung 10 von 17,5 mm einen Druckverlust zwischen der Einlassöffnung 16 und der Auslassöffnung 17 von 15 mbar. Bei diesem Ausführungsbeispiel beträgt der Nenndurchmesser DN 32 mm.

Die vorliegende Erfindung ist nicht durch das gezeigte Ausführungsbeispiel beschränkt. So kann die Anschlussarmatur 1 beispielsweise einen Sensor haben, mit dem die Temperatur des durch die Armatur 1 fließenden Wassers bestimmbar ist. Dieser Sensor kann für die Hauptströmung und/oder die zurückgeführte Ringleitungsströmung vorgesehen sein. Entsprechendes gilt für einen vorzugsweise an der Armatur vorzusehenden Sensor, mit dem der durch die Armatur fließende Volumenstrom bestimmbar ist.

Wenngleich die gezeigten Ausführungsbeispiele gerade Anschlussarmaturen zeigen, bei denen die Hauptströmungsrichtung nicht umgelenkt wird, ist es denkbar, die Armatur 1 so auszubilden, dass die Hauptströmungsrichtung an der Einlassöffnung 16 um 90 Grad gegenüber der Hauptströmungsrichtung an der Auslassöffnung 17 versetzt ist. In diesem Fall bildet die Anschlussarmatur einen 90 Grad-Knick aus.

Im Hinblick auf möglichst gleichmäßige runde und weiche Übergänge sind die Armatur 1 und/oder der Düseneinsatz 3 als gegossene Bauteile hergestellt. Der Ringleitungsanschlussstutzen 5 wird bei in den Fig. 1 und 2 gezeigten Ausführungsbeispiel über eine Pressverbindung an die Ringleitung angeschlossen. Selbstverständlich sind andere Anschlüsse möglich, bei denen der Ringleitungsanschlussstutzen ein Innen- bzw. ein Außengewinde aufweisen kann. Auch ist die Befestigung der Ringleitung über eine Überwurfmutter denkbar. Gleiches gilt für den Anschluss des Stranges an die Armatur.

Die Fig. 3 zeigt ein weiteres Ausführungsbeispiel der erfindungsgemäßen Anschlussarmatur, bei welcher die Armatur ein die Einfädelöffnung 4 und eine zu der Ringleitung führende Abzweigöffnung 19 mit zugeordnetem Ringleitungsschlussstutzen 20 umfasst. Der abzweigseitige Ringanschlussstutzen 20 ist wie der den Einfädelkanal 4 ausbildende Ringleitungsanschlussstutzen 5 als Teil des Gussteiles ausgebildet. Die Geometrie der Querschnittsverengung 10 und die Anordnung der Einfädelöffnung 14 entspricht im Wesentlichen dem Ausführungsbeispiel gemäß Fig. 2. Gegenüber diesem Ausführungsbeispiel sind bei dem in Fig. 3 gezeigten Ausführungsbeispiel gleiche Bauteile mit gleichen Bezugszeichen versehen.
Auch bei dem in Fig. 3 gezeigten Ausführungsbeispiel geht der einfädelseitige Ringleitungsanschlussstutzen 5 und der abzweigseitige Ringleitungsanschlussstutzen 20 rechtwinklig von der Hauptströmungsrichtung H ab. Der abzweigseitige Ringleitungsstutzen 20 hat einen wirksamen Strömungsquerschnitt, der größer als der entsprechende Strömungsquerschnitt des einfädelseitigen Ringleitungsanschlussstutzens ist. Das Verhältnis der Durchmesser bei den üblichen kreisrunden Strömungsquerschnitten kann zwischen 1,2 und 1,6 sein. Bei dem gezeigten Ausführungsbeispiel ist der Innendurchmesser des abzweigseitigen Ringleitungsanschlussstutzens 20 etwa um den Faktor 1,4 größer als der Innendurchmesser des Anschlussstutzens 5.

Im Gegensatz zu dem in den Fig. 1 und 2 gezeigten Ausführungsbeispielen kann das in Fig. 3 gezeigte Ausführungsbeispiel der Armatur ohne nachgeordnete Montageschritte als einheitliches Gussteil fertig gestellt werden. An diesem Gussteil werden dann die zum Anschluss an den Strang bzw. die Ringleitung bei dem Ausführungsbeispiel nach Fig. 3 ausgebildeten Innengewinde 22 geschnitten, gegebenenfalls die Strömungswandungen insbesondere im Zylinderabschnitt 11 und im Bereich der Querschnittsverengung 10 gegebenenfalls im Bereich der geraden Abschnitte der Ringleitungsstutzen 5, 20 überdreht.

Die Fig. 4 zeigt eine Längsschnittsansicht des in Fig. 3 gezeigten Ausführungsbeispiels mit an den Ringleitungsanschlussstutzen 5, 20 angeschlossenen Vollstromabsperrventilen 23. Gegenüber in Fig. 3 gezeigten Ausführungsbeispiel sind allerdings die Anschlüsse für den Strang und die Ringleitung abgewandelt. So weist das Gussteil zum Anschluss an den Strang Außengewinde 24 auf. Der Anschluss an die Ringleitung unter Zwischenschaltung der Vollstromabsperrventile 23 erfolgt über eine Überwurfmutter 25. Das Vollstromabsperrventil ist flachdichtend an die jeweiligen Ringleitungsanschlussstutzen 5, 20 unter Zwischenlage einer Dichtung 26 angeschlossen. Vorzugsweise sind die Absperrventile 23 totraumfrei.

### Bezugszeichenliste

- 1: Anschlussarmatur
- 2: Armaturgehäuse
- 3: Düseneinsatz
- 4: Einfädelkanal
- 5: Ringleitungsanschlussstutzen, einfädelseitig
- 6: Rohrleitungsstück
- 7: Madenschraube
- 8: einsatzseitiger Eirifädelabschnitt
- 9: gehäuseseitiger Einfädelabschnitt
- 10: Querschnittsverengung
- 11: Zylinderabschnitt
- 12: Konusabschnitt
- 13: Radius
- 14: Einfädelöffnung
- 15: trichterförmig verbreiterter Rohrabschnitt
- 16: Einlassöffnung
- 17: Auslassöffnung
- 18: Anlageschulter
- 19: Abzweigöffnung
- 20: Ringleitungsanschlussstutzen, abzweigseitig
- 22: Innengewinde
- 23: Vollstromabsperrventil
- 24: Außengewinde
- 25: Überwurfmutter
- 26: Dichtung
- d: Durchmesser der Querschnittsverengung 10
- DN: Nenndurchmesser des Stranges und des Zylinderabschnitts 11
- H: Hauptströmungsrichtung
- α: Winkel zwischen Einfädelkanal und Hauptströmungsrichtung

## Patentansprüche

1. Anschlussarmatur zum Anschließen einer Ringleitung mit mindestens einem Verbraucher an einen Stockwerks- bzw. Steigrohrstrang mit an den Strang anschließbaren Ein- und Auslassöffnungen (16, 17) und einer dazwischenliegenden Einfädelöffnung (14) mit einem zu dieser führenden Einfädelkanal (4) für die Ringleitung, welcher Einfädelöffnung (14) in Hauptströmungsrichtung (H) eine Querschnittsverengung (10) vorgelagert ist, an welche sich ein in Hauptströmungsrichtung (H) trichterförmig verbreitender Rohrabschnitt (15) anschließt,
**dadurch gekennzeichnet,**
**dass** die Einfädelöffnung (14) an dem trichterförmigen Rohrabschnitt (15) vorgesehen ist und der zu der Einfädelöffnung (14) führende Einfädelkanal eine winkelige Anstellung relativ zur Hauptströmungsrichtung (H) von nicht mehr als 75 Grad hat.

2. Anschlussarmatur nach Anspruch 1, **dadurch gekennzeichnet, dass** die Druckdifferenz bei einer Strömungsgeschwindigkeit im Strang von 1,5 m/s nicht größer als 60 mbar, vorzugsweise nicht größer als 30 mbar ist.

3. Anschlussarmatur nach Anspruch 1, **dadurch gekennzeichnet, dass** die Druckdifferenz bei einer Strömungsgeschwindigkeit im Strang von 1,5 m/s nicht größer als 25 mbar, vorzugsweise nicht größer als 20 mbar ist.

4. Anschlussarmatur nach einem der vorherigen Ansprüche, **dadurch gekennzeichnet, dass** die Einfädelöffnung (14) derart ausgebildet ist, dass die aus der Ringleitung zurückgeführte Ringleitungsströmung unter einem Einströmwinkel (α) von zwischen 35 Grad und 55 Grad zur Hauptströmungsrichtung (H) einströmt.

5. Anschlussarmatur nach Anspruch 4, **dadurch gekennzeichnet, dass** der Einströmwinkel
(α) zwischen 42 Grad und 47 Grad zur Hauptströmungsrichtung (H) ist.

6. Anschlussarmatur nach einem der vorherigen Ansprüche, **gekennzeichnet durch** eine zu der Querschnittsverengung (10) überleitende und/oder von der Querschnittsverengung zu dem Strang überleitende Gestaltung der Innenwand der Anschlussarmatur, **durch** welche der **durch** die Querschnittsverengung fließende Teilstrom verlustarm **durch** die Armatur hindurchgeleitet wird.

7. Anschlussarmatur nach einem der vorherigen Ansprüche, **dadurch gekennzeichnet, dass** das Verhältnis von Strangdurchmesser (DN) zu kleinstem Durchmesser (d) der Querschnittsverengung (10) zwischen 1,5 und 2,1 liegt.

8. Anschlussarmatur nach einem der vorherigen Ansprüche, **dadurch gekennzeichnet, dass** die Einfädelöffnung (14) in etwa denselben Durchmesser wie die Querschnittsverengung (10) aufweist.

9. Anschlussarmatur nach einem der vorherigen Ansprüche, **dadurch gekennzeichnet, dass** die Einfädelöffnung (14) in Hauptströmungsrichtung (H) hinter dem kleinsten Durchmesser (d) der Querschnittsverengung (10) angeordnet ist.

10. Anschlussarmatur nach einem der vorherigen Ansprüche, **gekennzeichnet durch** einen die Querschnittsverengung (10) ausbildenden Düseneinsatz (3), der in einem an den Strang anschließbaren Armaturengehäuse (2) aufgenommen ist.

11. Anschlussarmatur nach Anspruch 10, **dadurch gekennzeichnet, dass** der Rohrabschnitt (15) durch den Düseneinsatz (3) ausgebildet ist.

12. Anschlussarmatur nach einem der vorherigen Ansprüche, **gekennzeichnet durch** einen an dem Armaturengehäuse (2) befestigten und dieses überragenden Ringleitungsanschlussstutzen (5).

13. Anschlussarmatur nach einem der vorherigen Ansprüche, **dadurch gekennzeichnet, dass** der Düseneinsatz (3) die Einfädelöffnung (14) und einen einsatzseitigen Einfädelkanalabschnitt (8) ausbildet, der absatzfrei mit einem gehäuseseitigen Einfädelkanalabschnitt (9) fluchtet, der jedenfalls teilweise durch den Ringleitungsanschlussstutzen (5) gebildet wird.

14. Anschlussarmatur nach einem der vorherigen Ansprüche, **dadurch gekennzeichnet, dass** der Düseneinsatz (3) lösbar in dem Armaturengehäuse (2) aufgenommen ist.

15. Anschlussarmatur nach einem der vorherigen Ansprüche, **dadurch gekennzeichnet, dass** der Düseneinsatz (3) jedenfalls einseitig bis an das Ende des Armaturengehäuses (2) reicht.

16. Anschlussarmatur nach einem der vorherigen Ansprüche, **dadurch gekennzeichnet, dass** das Armaturengehäuse (2) im Bereich des anderen Endes eine Anlageschulter (18) für den Düseneinsatz (3) ausbildet.

17. Anschlussarmatur nach einem der vorherigen Ansprüche, **dadurch gekennzeichnet, dass** zwischen dem Zylinderabschnitt (11) und dem Strang ein Konusabschnitt (12) vorgesehen ist.

18. Anschlussarmatur nach einem der vorherigen Ansprüche, **dadurch gekennzeichnet, dass** der Konusabschnitt (12) gegenüber der Hauptströmungsrichtung (H) um 10 Grad bis 20 Grad angestellt ist.

19. Anschlussarmatur nach einem der vorherigen Ansprüche, **gekennzeichnet durch** einen Sensor, mit dem die Temperatur des **durch** die Armatur fließenden Wassers bestimmbar ist.

20. Anschlussarmatur nach einem der vorherigen Ansprüche, **gekennzeichnet durch** einen Sensor, mit dem der **durch** die Armatur fließende Volumenstrom bestimmbar ist.

21. Anschlussarmatur nach einem der vorherigen Ansprüche, **dadurch gekennzeichnet, dass** die Hauptströmungsrichtung (H) an der Einlassöffnung (16) um 90 Grad gegenüber der Hauptströmungsrichtung (H) an der Auslassöffnung (17) versetzt ist.

22. Anschlussarmatur nach einem der vorherigen Ansprüche, **gekennzeichnet durch** eine in Strömungsrichtung der Querschnittsverengung (10) vorgelagerten Abzweigung zu der Ringleitung.

23. Anschlussarmatur nach Anspruch 22, **dadurch gekennzeichnet, dass** das Armaturengehäuse (2) und/oder der Düseneinsatz (3) als einteilig gegossenes Bauteil ausgebildet ist.

24. Anschlussarmatur nach einem der vorherigen Ansprüche, **dadurch gekennzeichnet, dass** die Anschlussarmatur ein einteiliges, eine Abzweigöffnung (19) und eine Einfädelöffnung (14) aufweisendes Gussteil umfasst.

25. Anschlussarmatur nach Anschluss 24, **dadurch gekennzeichnet, dass** das Gussteil einen von der Abzweigöffnung (19) abführenden und/oder einen zu der Einfädelöffnung (14) führenden Ringleitungsanschlussstutzen (20; 5) ausbildet.

26. Anschlussarmatur nach einem der vorherigen Ansprüche, **dadurch gekennzeichnet, dass** der wenigstens eine Ringleitungsanschlussstutzen (5; 20) im Wesentlichen rechtwinklig zur Hauptströmungsrichtung (H) abgeht.

27. Anschlussarmatur nach einem der vorherigen Ansprüche, **dadurch gekennzeichnet, dass** der abzweigseitige Ringleitungsanschlussstutzen (20) einen größeren wirksamen Strömungsquerschnitt als der einfädelseitige Ringleitungsanschlussstutzen (5) hat.

28. Anschlussarmatur nach einem der vorherigen Ansprüche, **gekennzeichnet durch** ein an einem Ringleitungsanschlussstutzen (5; 20) vorgesehenes Vollstromabsperrventil (23).

29. Trink- und Brauchwassersystem mit wenigstens einem Stockwerks- bzw. Steigrohrstrang, **gekennzeichnet durch** mehrere in Strömungsrichtung in dem Strang hintereinander angeordnete Ringleitungen, die zu mindestens einem Verbraucher führen und jeweils über eine Anschlussarmatur nach wenigstens einem der vorherigen Ansprüche in den Strang münden.

## Claims

1. Connection Fitting for connecting a ring line (loop) to at least one user of a Multi-storeyed or a Stand Pipe line with inlets and outlets (16,17) which can be fit onto the line and an insertion opening (14) which is in between (the inlet and the outlet) with an insertion opening(4) for the Ring line (Loop) that leads to it, <1> in the Main Inflow Direction (H) a cross-section constriction (10) has been provided, to which a funnel-shaped dispersing Pipe Section (15) is connected in the Main Inflow Direction (H) (15),
which is **characterised in such a manner that,**
the insertion opening(14) is provided on the funnel-shaped pipe section (15) and the Insertion Canal which is leading to the Insertion Opening (14) is at an angle of not more than 75 degrees to the Main Inflow Direction (H).

2. Connection fitting according to (as described in) Claim 1, **characterised in** such a manner that the pressure difference in the line at a flow speed of 1.5 m/s is not higher than 60 mbar, preferably (ideally) not higher than 30 mbar.

3. Connection fitting according to (as described in) Claim 1, **characterised in such a manner** that the pressure difference in the line at a flow speed of 1.5 m/s is not higher than 25 mbar, preferably (ideally) not higher than 20 mbar.

4. Connection Fitting mentioned in the previous claims, **characterised in such a manner** that the Insertion Opening (14) is designed in a way that the flow that is sent back out of the Ring Line **(Loop) is sent** out at an inflow angle (a) of 35 to 55 degrees to the Main Inflow Direction (H).

5. Connection fitting according to (as described in) Claim 4, **characterised in such a manner** that the inflow angle (α) is between 42 degrees and 47 degrees to the Main inflow direction (H).

6. Connection Fitting according to the previous claims, **characterised in such a manner** that the design of the inner wall of the Connection Fitting which transits **from** the cross-section constriction (10) and/or the design of the inner wall of the Connection Fitting which transits from the Cross-Section Constriction (10) **to the Line** (carrying water), forms the Connection Fitting through which the partial flow loss arm is directed through the Connection Fitting which flows through the cross-section constriction.

7. Connection Fitting mentioned in the previous claims, **characterised in such a manner** that the ratio of the line diameter (DN) to that of the smallest diameter (d) of the cross-section constriction (10) is between 1.5 and 2.1.

8. Connection Fitting mentioned in the previous claims, **characterised in such a manner** that the insertion opening (14) has approximately the same diameter as that of the cross-section constriction (10).

9. Connection Fitting mentioned in the previous claims, is **characterised in that** the insertion opening (14) is arranged in the Main inflow direction (H) behind the smallest diameter (d) of the Cross-Section Constriction (10).

10. Connection Fitting mentioned in the previous claims, **characterised in such a manner** that the Nozzle Assembly (3) which is made up of Cross-Section Constriction (10) is mounted on a Connection Fitting Housing (2) which can be connected to the line.

11. Connection fitting according to (as described in) Claim 10, **characterised in such a manner** that the pipe section (15) is constructed through the nozzle assembly (3).

12. Connection Fitting mentioned in the previous claims, **is characterised by** Ring Line (Loop) joints (5) which are attached to and towering over the Connection Fitting Housing (2).

13. Connection Fitting mentioned in the previous claims, **characterised in such a manner** that the nozzle assembly (3) is made up of an insertion opening (14) and an insertion channel section (8) which is on the side of use, which aligns itself in a level manner to that side of the insertion channel section (9) which is on the side of the housing, which is to some extent made through the Ring line (loop) joints (5).

14. Connection Fitting mentioned in the previous claims, **characterised in such a manner** that the nozzle assembly (3) which is mounted on the Connection Fitting Housing (2) in such a manner that it can be removed.

15. Connection Fitting mentioned in the previous claims, **characterised in such a manner** that the nozzle assembly (3) reaches on one side up to the end of the Connection Fitting Housing (2).

16. Connection Fitting mentioned in the previous claims, **characterised in such a manner** that the Connection Fitting Housing (2) in the region of the other end of its Layout Shoulder (18) is designed for the Nozzle Assembly (3).

17. Connection Fitting mentioned in the previous claims, **characterised in such a manner** that a Cone Section has been provided between the Cylinder Section (11) and the Line (12).

18. Connection Fitting mentioned in the previous claims, **characterised in such a manner** that the Cone Section (12) is placed at 10 to 20 degrees against the Main Inflow Direction (H).

19. Connection Fitting mentioned in the previous claims, is **characterised by** a sensor, which can determine the temperature of the water which is flowing through the connection fitting.

20. Connection Fitting mentioned in the previous claims, is **characterised by** a sensor, which can determine the volume of the flow flowing through the connection fitting.

21. Connection Fitting mentioned in the previous claims, **characterised in such a manner** that the Main Inflow Direction (H) at the inlet (16) is displaced (offset) at a 90 Degree angle to the Outlet (17) against the Main Inflow Direction (H).

22. Connection Fitting mentioned in the previous claims is **characterised by** an upstream branch connection to the Ring Line (Loop) which has been placed in the flow direction of the cross-section constriction (10).

23. Connection fitting according to (as described in) Claim 22, **characterised in such a manner** that the Connection Fitting Housing (2) and/or the Nozzle Assembly (3) has been designed as a component cast in one-piece.

24. Connection Fitting mentioned in the previous claims, **characterised in such a manner** that the Connection Fitting comprises a cast in one-piece branch opening (19) and an Insertion Opening (14).

25. Connection fitting according to (as described in) Claim 24, **characterised in such a manner** that the casting has a Ring Line (loop) junction (20;5) which is leading out of the Branch Opening (19) or a Ring Line (loop) Junction leading into the Nozzle Assembly (14).

26. Connection Fitting mentioned in the previous claims, **characterised in such a manner** that at least one of the Ring Line (Loop) junctions (5; 20) leaves at a right angle to the Main Inflow Direction (H).

27. Connection Fitting mentioned in the previous claims, **characterised in such a manner** that the Ring line Junctions on the side of the branches (20) has a larger effective cross-sectional flow than the Ring Line (Loop) Junctions on the side of the insertion opening (5).

28. Connection Fitting mentioned in the previous claims, **is characterised by** a full-flow shut-off Valve (23) which has been provided on the Ring Line (Loop) Junction (5; 20).

29. System for Potable- and Industrial Use Water with at least one Multi-storeyed- or a Stand Pipe Line **characterised by** Ring Lines (Loops) which have been arranged in the line (Line which carries the water) one behind the other in the direction of the flow, which are directed to at least one user and which are connected to the line (carrying water) through a junction fitting described in the previous claims.

## Revendications

1. Raccord de branchement pour raccorder une conduite en boucle avec au moins un élément consommateur à une canalisation de distribution d'étage ou de colonne montante, comprenant des ouvertures d'entrée et de sortie (16, 17) pouvant être raccordées à la canalisation, et, située entre-elles, une ouverture d'insertion (14) avec un canal d'insertion (4) conduisant à celle-ci, pour la conduite en boucle, cette ouverture d'insertion (14) étant précédée, dans la direction d'écoulement principale (H), par un rétrécissement de section transversale (10) auquel se raccorde un tronçon de tube (15) s'évasant en forme d'entonnoir dans la direction d'écoulement principale (H),
**caractérisé**
**en ce que** l'ouverture d'insertion (14) est prévue au niveau du tronçon de tube (15) en forme d'entonnoir, et le canal d'insertion menant à l'ouverture d'insertion (14) présente une incidence angulaire par rapport à la direction d'écoulement principale (H) de pas plus de 75 degrés.

2. Raccord de branchement selon la revendication 1, **caractérisé en ce que** la différence de pression, pour une vitesse d'écoulement de 1,5 m/s dans la canalisation, n'est pas plus grande que 60 mbar, de préférence pas plus grande que 30 mbar.

3. Raccord de branchement selon la revendication 1, **caractérisé en ce que** la différence de pression, pour une vitesse d'écoulement de 1,5 m/s dans la canalisation, n'est pas plus grande que 25 mbar, de préférence pas plus grande que 20 mbar.

4. Raccord de branchement selon l'une des revendications précédentes, **caractérisé en ce que** l'ouverture d'insertion (14) est configurée de manière telle, que l'écoulement de conduite en boucle revenant de la conduite en boucle, rentre dans le raccord sous un angle d'incidence d'écoulement de rentrée (α) compris entre 35 degrés et 55 degrés par rapport à la direction d'écoulement principale (H).

5. Raccord de branchement selon la revendication 4, **caractérisé en ce que** l'angle d'incidence d'écoulement de rentrée (α) est compris entre 42 degrés et 47 degrés par rapport à la direction d'écoulement principale (H).

6. Raccord de branchement selon l'une des revendications précédentes, **caractérisé par** une configuration de la paroi intérieure du raccord de branchement assurant la transition vers le rétrécissement de section transversale (10) et/ou la transition du rétrécissement de section transversale à la canalisation, par laquelle le flux partiel s'écoulant à travers le rétrécissement de section transversale s'écoule avec de faibles pertes à travers le raccord.

7. Raccord de branchement selon l'une des revendications précédentes, **caractérisé en ce que** le rapport du diamètre de canalisation (DN) au plus petit diamètre (d) du rétrécissement de section transversale (10) se situe entre 1,5 et 2,1.

8. Raccord de branchement selon l'une des revendications précédentes, **caractérisé en ce que** l'ouverture d'insertion (14) présente environ le même diamètre que le rétrécissement de section transversale (10) .

9. Raccord de branchement selon l'une des revendications précédentes, **caractérisé en ce que** l'ouverture d'insertion (14) est agencée, en se référant à la direction d'écoulement principale (H), après le plus petit diamètre (d) du rétrécissement de section transversale (10).

10. Raccord de branchement selon l'une des revendications précédentes, **caractérisé par** un insert de buse (3) formant le rétrécissement de section transversale (10) et qui est logé dans un corps de raccord (2) pouvant être raccordé ou branché à la canalisation.

11. Raccord de branchement selon la revendication 10, **caractérisé en ce que** le tronçon de tube (15) est formé par l'insert de buse (3).

12. Raccord de branchement selon l'une des revendications précédentes, **caractérisé par** un embout de branchement de conduite en boucle (5), qui est fixé au corps de raccord (2) et dépasse de celui-ci.

13. Raccord de branchement selon l'une des revendications précédentes, **caractérisé en ce que** l'insert de buse (3) forme l'ouverture d'insertion (14) et un tronçon de canal d'insertion (8) du côté insert, aligné sans décrochement avec un tronçon de canal d'insertion (9) du corps de raccord, qui dans tous les cas est partiellement formé par l'embout de raccordement de conduite en boucle (5).

14. Raccord de branchement selon l'une des revendications précédentes, **caractérisé en ce que** l'insert de buse (3) est logé de manière amovible dans le corps de raccord (2).

15. Raccord de branchement selon l'une des revendications précédentes, **caractérisé en ce que** l'insert de buse (3) s'étend dans tous les cas d'un côté jusqu'à l'extrémité du corps de raccord (2).

16. Raccord de branchement selon l'une des revendications précédentes, **caractérisé en ce que** le corps de raccord (2) forme dans la zone de l'autre extrémité, un épaulement de butée (18) pour l'insert de buse (3).

17. Raccord de branchement selon l'une des revendications précédentes, **caractérisé en ce qu'**entre le tronçon cylindrique (11) et la canalisation, est prévu un tronçon conique (12).

18. Raccord de branchement selon l'une des revendications précédentes, **caractérisé en ce que** le tronçon conique (12) présente une incidence de 10 à 20 degrés par rapport à la direction d'écoulement principale (H).

19. Raccord de branchement selon l'une des revendications précédentes, **caractérisé par** un capteur à l'aide duquel peut être déterminée la température de l'eau s'écoulant à travers le raccord.

20. Raccord de branchement selon l'une des revendications précédentes, **caractérisé par** un capteur à l'aide duquel peut être déterminé le débit volumique s'écoulant à travers le raccord.

21. Raccord de branchement selon l'une des revendications précédentes, **caractérisé en ce que** la direction d'écoulement principale (H) au niveau de l'ouverture d'entrée (16) est décalée de 90 degrés par rapport à la direction d'écoulement principale (H) au niveau de l'ouverture de sortie (17).

22. Raccord de branchement selon l'une des revendications précédentes, **caractérisé par** une dérivation vers la conduite en boucle, située en amont du rétrécissement de section transversale (10) en se référant à la direction d'écoulement.

23. Raccord de branchement selon la revendication 22, **caractérisé en ce que** le corps de raccord (2) et/ou l'insert de buse (3) est réalisé sous forme de pièce moulée d'un seul tenant.

24. Raccord de branchement selon l'une des revendications précédentes, **caractérisé en ce que** le raccord de branchement comprend une pièce de fonderie d'un seul tenant, comportant une ouverture de dérivation (19) et une ouverture d'insertion (14).

25. Raccord de branchement selon la revendication 24, **caractérisé en ce que** la pièce de fonderie forme un embout de branchement de conduite en boucle (20; 5) partant de l'ouverture de dérivation (19) et/ou menant à l'ouverture d'insertion (14).

26. Raccord de branchement selon l'une des revendications précédentes, **caractérisé en ce que** ledit au moins un embout de branchement de conduite en boucle (5; 20) fait saillie sensiblement de manière perpendiculaire à la direction d'écoulement principale (H) .

27. Raccord de branchement selon l'une des revendications précédentes, **caractérisé en ce que** l'embout de branchement de conduite en boucle (20) en dérivation présente une section transversale active d'écoulement plus grande que l'embout de branchement de conduite en boucle d'insertion (5).

28. Raccord de branchement selon l'une des revendications précédentes, **caractérisé par** une vanne d'arrêt d'écoulement total (23) prévue sur un embout de branchement de conduite en boucle (5; 20).

29. Système d'eau potable et sanitaire comprenant au moins une canalisation de distribution d'étage ou de colonne montante, **caractérisé par** plusieurs conduites en boucle agencées successivement dans la canalisation et menant chacune à au moins un élément consommateur, et qui débouchent dans la canalisation respectivement par un raccord de branchement selon l'une des revendications précédentes.
